# EUROPEAN PATENT APPLICATION

(11) **EP 2 955 476 A1**
(43) Date of publication of application: **16.12.2015**
(21) Application number: 14172209.0
(22) Date of filing: 12.06.2014
(51) Int. Cl.: G01B 3/10, A45F 5/02, F16B 45/02

(54) **Tape measure assembly with clip for securely attaching the assembly to another object**

(71) Applicant: Stanley Black & Decker, Inc., New Britain, CT 06053 (US)
(72) Inventor: Lan, Kuo Shuo, 406 Taichung City (TW); Liu, Chao Lien, 406 Taichung City (TW); Meng, Fan-Yi, 231 New Taipei City (TW)
(74) Representative: Stentiford, Andrew Charles

(57) **Abstract**

A tape measure assembly comprises a housing; a reel rotatably mounted in the housing; an elongated blade wound on the reel and extendable through an opening in the housing; and a spring within the housing and configured to rotate the reel in the housing in a direction to wind the blade up. The housing comprises a clip assembly for securely attaching the assembly to another object and comprising a fixed arm projecting from the housing and a moveable sprung arm mounted on the housing, the sprung arm being biased towards a distal end of the fixed arm such that the clip assembly is in a closed position when the sprung arm abuts the fixed arm.

## Description

The present invention relates to a tape measure assembly. In particular the present invention relates to a tape measure assembly comprising a clip assembly.

Tape measures are used in industrial or domestic environments. Often a tape measure is required to be used at height for example on a construction site. When the tape measure is not in use, the tape measure must be securely fastened so that it cannot be accidentally dropped.

For many years it has been known to mount a belt clip on the planar side of a tape measure. The belt clip allows the tape measure to be securely fastened to a belt loop or belt of a pair of workwear trousers. A problem with many belt clips on tape measures is that they are made of a stiff metal materials. This means that prising the belt clip away from the tape measure housing can be difficult and sometimes this action hurts a user's fingers. The stiffness of the belt clip can also make the physical act of attaching and detaching the tape measure to the belt or another object difficult.

One alternative solution for attaching a tape measure to a user's clothes is shown US 7,506,456. US 7,506,456 shows a rule assembly with a beam that may pivot about a securing pin. The beam arm may be selectively locked to the housing via a latch mechanism. When a distal end of the beam is detached from the housing, the beam pivots outward to release whatever retention structure has been inserted in the opening. A loop of fabric etc can be threaded on the open beam before the beam is locked at the distal end to the housing.

A problem is US 7,506,456 is that operation of the latch mechanism and the beam requires a two handed operation. The user must first hold the tape measure with one hand and then close the beam until it is locked with the other hand. At the same time a loop of fabric is required to stay threaded on the beam whilst the user closes the beam. Furthermore release of the beam requires operation of the release button which is recessed in the housing. This is particularly difficult when the user's hands are gloved.

Another means of fastening a tape measure is shown in EP 0 970 347 which discloses a withdrawable graduated tape measuring instrument including a safety device. The tape measure comprises a length of resilient material such as plastic material which is coupled to the tape measure at one end and comprises a latching element at the other end. The problem with this arrangement is that the tape measure is allowed to swing whilst being attached to the user's belt. This means that the tape measure will repeatedly hit the user in the leg or the tape measure can become damaged when striking a solid object.

Embodiments of the present invention aim to address the aforementioned problems.

According to an aspect of the present invention there is a tape measure assembly comprising: a housing; a reel rotatably mounted in the housing; an elongated blade wound on the reel and extendable through an opening in the housing; and a spring within the housing and configured to rotate the reel in the housing in a direction to wind the blade up; wherein the housing comprises a clip assembly comprising a fixed arm projecting from the housing and a moveable sprung arm mounted on the housing, the sprung arm being biased towards a distal end of the fixed arm such that the clip assembly is in a closed position when the sprung arm abuts the fixed arm.

This means that the tape measure assembly is easier to attach to a retaining object because the clip assembly can be operated with just one hand. The user can retract the elongate blade into the housing and then attach the tape measure to an object using only one hand. This leaves the users other hand free to carry out other tasks and makes working with the tape measure in precarious places safer.

Preferably the moveable sprung arm is pivotally mounted on the housing. This means that the sprung arm can be easily operated by simply pressing the sprung arm. A user can operate the clip assembly with gloved hands.

Preferably the fixed arm protrudes from the housing and defines a space between the fixed arm and the housing. In this way the fixed arm defines a large structure for receiving retaining objects and the fixed arm can be hooked on a variety of different sized structures and objects.

Preferably the distal end of the fixed arm comprises a recess for receiving a portion of the sprung arm. This means that the recess restrains the sprung arm's lateral movement and prevents the sprung arm from accidentally opening in the case that the sprung arm receives a sideways shock.

Preferably the clip assembly projects rearwardly in a direction opposite to the opening in the housing. Preferably the fixed arm comprises a first portion projecting rearwardly from the housing in a direction opposite to the opening in the housing and a second portion connected to the first portion extending substantially perpendicularly to the first portion. This means that the fixed arm defines a sturdy hook like structure which makes attaching the clip assembly to retaining objects easier for the user.

Preferably a pivot mounting of the sprung arm is closer along a longitudinal axis of the tape measure assembly to the opening than a face of the second portion facing the housing. In this way the sprung arm does not obstruct access to the space defined by the fixed arm from a downwards direction. This means that the user can more easily clip the tape measure to an object with a single downwards action.

Preferably the sprung arm is metal and the fixed arm is a plastic material.

Preferably the sprung arm is moveable between the closed position in which the sprung arm abuts the distal end of the fixed arm and an open position in which the sprung arm is adjacent to the housing.

Preferably the rearwardly most portion of the fixed arm comprises a flat, upright portion for abutting against walls. This means the user can more easily use the tape measure assembly in corners and confined spaces.

Preferably the end of the distal end of the fixed arm comprises an oblique face. Preferably the fixed arm comprises a protruding lip which protrudes rearwardly beyond the sprung arm when the sprung arm abuts against the fixed arm. The oblique face and the protruding lip both help guide an object into the clip assembly which makes one handed operation of the clip assembly easier.

Preferably the sprung arm is biased with a force sufficient to generate an audible click when the sprung arm returns to abutment with the fixed arm. This means that the user can attach the tape measure assembly to a retaining object and know that the tape measure assembly has been attached to the object without looking at the tape measure assembly and object.

Preferably a height dimension of the housing tapers from the forward end comprising the opening to the rearward end comprising the clip assembly. In this way the clip assembly also provides an ergonomic housing with a variable height dimension. This means that different sized hands can grip the tape measure assembly at different points along the housing.

Various other aspects and further embodiments are also described in the following detailed description and in the attached claims with reference to the accompanying drawings, in which:
Figure 1 shows a perspective view of the tape measure assembly;
Figure 2 shows cross sectional side view the tape measure assembly with the blade retracted;
Figure 3 shows another cross sectional side view of the tape measure assembly with the blade extended;
Figure 4 shows a cross sectional front view of the tape measure assembly;
Figure 5 shows a side view of the tape measure assembly; and
Figure 6 shows a rear view of the tape measure assembly.

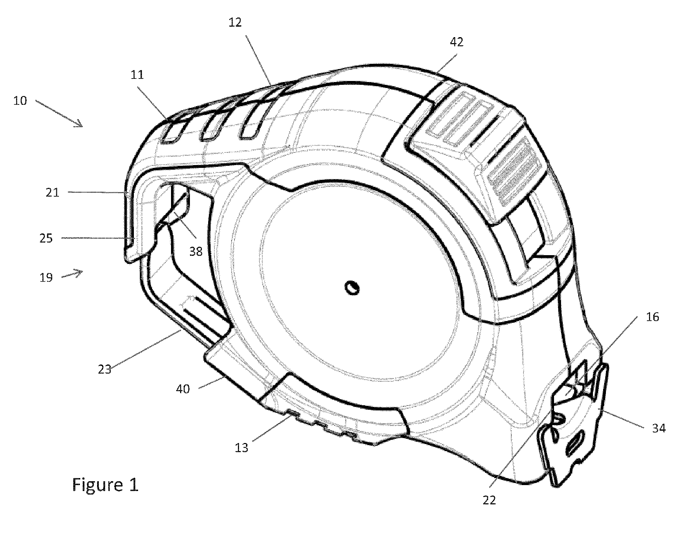

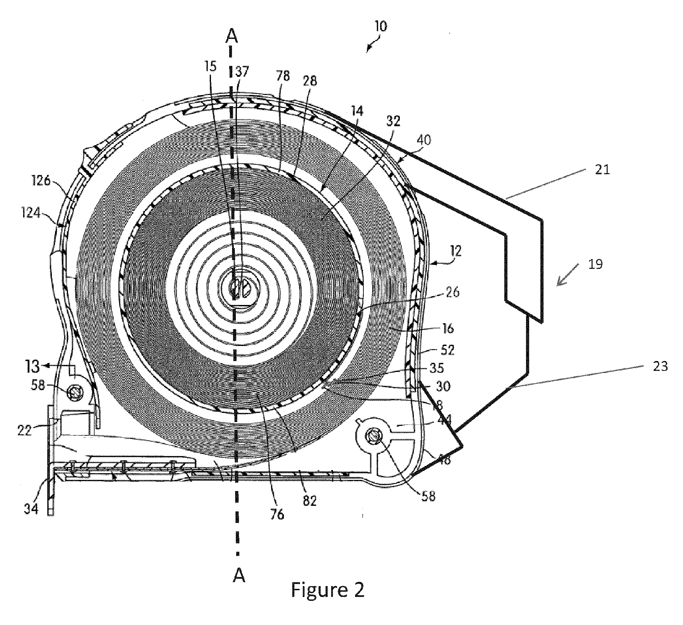

Figure 1 shows a perspective view of a tape measure assembly 10 according to one embodiment. The tape measure assembly 10 will be referred to hereinafter as a tape measure for the purposes of clarity. The tape measure 10 comprises a housing 12 having a pair of cooperating housing members 40, 42. In one embodiment, the housing 12 is constructed to easily and comfortably fit in a hand of the user and houses the measuring tape or blade 16, a retraction or return spring 32 (as shown in Figures 2, 3 and 4) and other cooperating components. At a distal, free end of the blade 16 a hook 34 is attached thereto. The blade 16 and hook 34 as shown in Figure 1 are fully retracted into the housing 12 via opening 22.

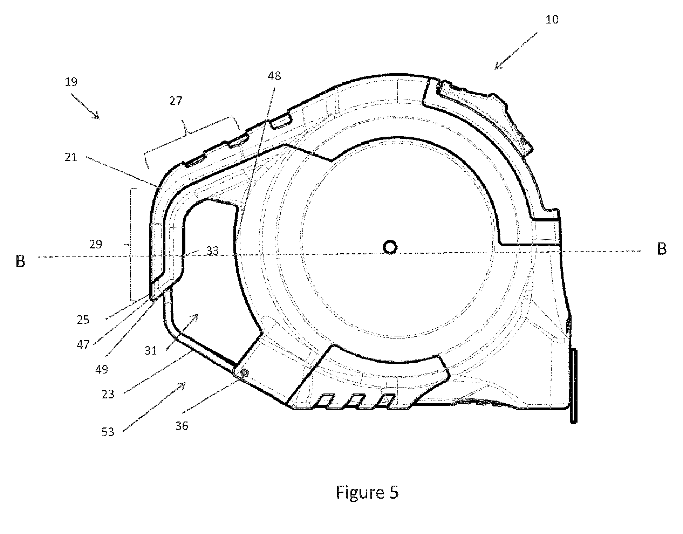

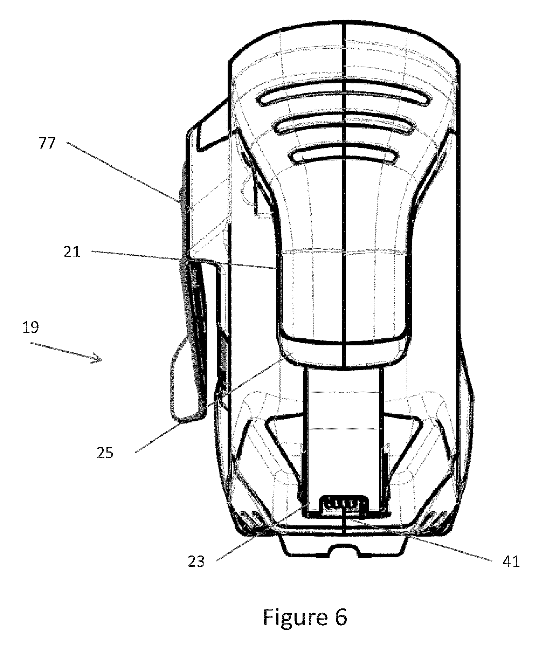

The tape measure 10 fits into the hand of the user with the opening 22 facing away from the user out of the user's hand. In this regard the end of the tape measure 10 comprising the opening 22 is the forward end of the tape measure 10. At the other end of the tape measure 10 the housing 12 comprises a clip assembly 19. The clip assembly 19 is a mechanism for securely attaching the tape measure 10 to another object. The clip assembly 19 will be discussed in further detail below in reference to Figures 5 and 6. The clip assembly 19 projects rearwardly from the housing 12 and abuts against the users palm when in use. In this way the end of the tape measure 10 comprising the clip assembly 19 is the rearward end of the tape measure 10.

The housing 12 tapers in a height dimension from the forward end comprising the opening 22 to the rearward end comprising the clip assembly 19. The fixed arm 21 and the sprung arm 23 are inclined at an angle with respect to a forward - rearward longitudinal axis B of the tape measure 10 (as shown in Figure 5). The sloping outwardly facing surfaces of the fixed arm 21 and the sprung arm 23 reduce the height of the housing 12 at the rearward end of the tape measure 10. This means that the tape measure fits more snugly and comfortably in a user's hand. The tapering of the housing 12 means that the tape measure 10 can be gripped with different sized hands.

In one embodiment, the housing 12 is constructed of, for example, a moulded plastic material. The housing 12 has a rubber grip 11 overmoulded on one or more portions of the housing. The overmoulded grip 11 is positioned on the top and rearward portions of the tape measure housing 12 where the user grips the tape measure. Rubber overmoulded portions may also be positioned on the underside 13 of the tape measure 10 where the tape measure 10 engages a surface.

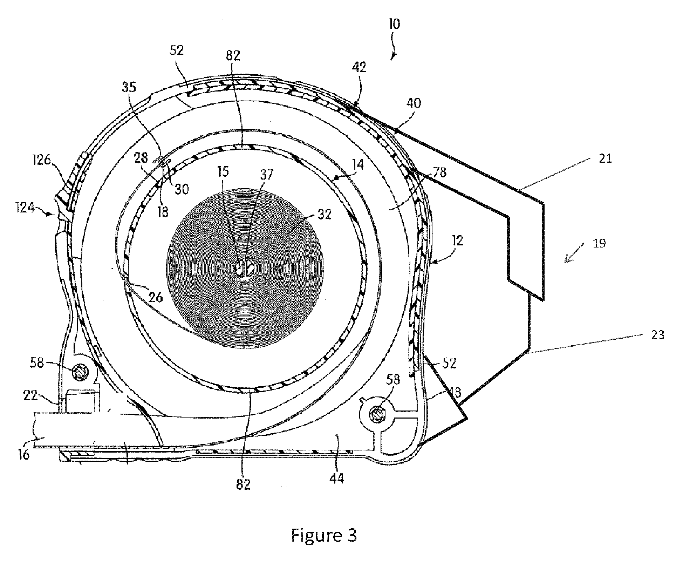

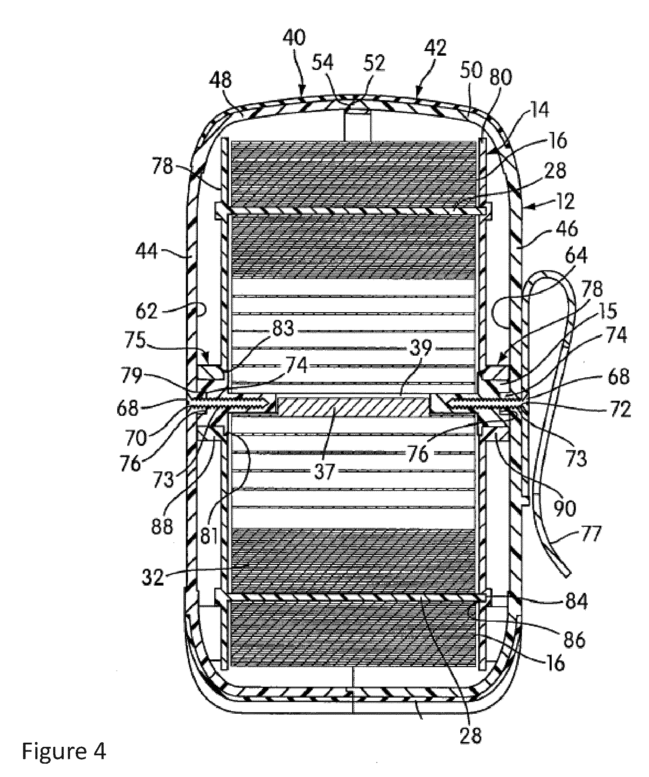

Turning to Figures 2, 3 and 4, the internal structure of the tape measure 10 will now be discussed in further detail. Figure 2 shows a cross sectional view of the tape measure 10 when the blade 16 is fully retracted in the housing 12. Figure 3 shows a cross sectional view of the tape measure 10 when the blade 16 is extended out of the housing. Figure 4 is a cross sectional view along axis A-A as shown in Figure 2.

As shown in Figure 4, the housing 12 includes a pair of cooperating housing members 40, 42. Each housing member 40, 42 includes an end wall 44, 46, respectively, and a peripheral wall 48, 50, respectively, extending from a periphery of the end walls and terminating in a free edge 52, 54, respectively. The pair of cooperating housing members 40, 42 are joined to one another in cooperating relation to define the housing 12.

When the housing members 40, 42 are fixed together in the assembled rule assembly 10, the free edges 52, 54 are overlapping and interengaged as shown in Figure 4. As shown in Figures 2 and 3, a plurality of axially extending fasteners 58 extend through one of the housing members 42 and threadedly engage the other housing member 40 at spaced positions in the respective end walls 44, 46 adjacent the peripheral walls 48, 50.

A belt clip 77 may be secured to one side of the housing 12 by fasteners or bolts 68. The belt clip 77 can be used to attach the rule assembly 10 to the belt of a user, or other attachment point. In one embodiment, the belt clip 77 is made from, for example, a metal material.

As can be appreciated from Figures 2 and 3, the reel 14 is rotatable in the housing 12 and the measuring tape or blade 16 is wound on the reel 14. The reel 14 is mounted in the housing 12 by the axle or reel spindle 15. The reel 14 may be provided with a slot or an opening 26 in a central cylindrical wall portion 28 thereof. One end 18 of the blade 16 terminates in a hook-like structure 30 that engages a first longitudinal end 35 of the return spring 32 to connect the end 18 of the blade 16 to the return spring 32. The return spring 32 is a coiled spring and arranged to store energy when the blade 16 is extended. The return spring 32 can be any resilient means for biasing the blade 16 into the housing 12. The blade 16 can be coupled to the return spring 32 by any other suitable means such as rivets, adhesives and such like.

The reel 14 includes two reel members 78, 80, as shown in Figure 4, that provide circular side walls and cylindrical wall portion or hub 28 about which the blade or measuring tape 16 is wound. Each reel member 78, 80 includes an outwardly extending cylindrical wall portion 88, 90, respectively, formed at least near a position at which the reel spindle or axle 15 joins the housing 12. In some other embodiments (not shown) the reel 14 is a single integral element. An annular edge portion 84 on the wall portion 82 is received within an annular groove 86 formed within the reel member 80 to help hold the reel 14 together, although other areas and types of connections are contemplated.

The axle or reel spindle 15 extends within the housing 12. The reel 14 is rotatably mounted on the axle or reel spindle 15. The axially extending spindle 15 is fixed at a central portion of the housing 12. In one embodiment, the fixed spindle 15 has a noncircular interengaging recess-projection connection (shown in Figure 4 and described below) at each end thereof generally with a central interior region 62, 64, respectively, of the end walls 44, 46 of the housing 12. Each end of the fixed spindle 15 is interiorly threaded to threadedly receive the bolts 68 therein. The bolts 68 extend through central holes 70, 72 formed in the respective adjacent end walls 44, 46 of the housing 12 and threadedly engage internal threading 73 in each end of the spindle 15. Each bolt 68 extends through a recess-projection connection 75, when each bolt 68 is disposed in a respective central hole 70, 72 and threaded interior 73.

The construction of the recess-projection connections 75 between the ends of the spindle 15 and the walls 44, 46 is shown in cross-section in Figure 4. Each recess-projection connection 75 is identical. In one embodiment, projections 74 having exterior noncircular cross-sections are integrally formed on the walls 44, 46 and are received within recesses 76 having complementary non-circular interior cross-sections formed on each end of the spindle 15. The noncircular interior and exterior cross-sections cooperate to prevent rotation of the spindle 15 with respect to the housing 12 when the ends of the spindle 15 are mounted on the projections 74 in the assembled rule assembly 10.

Each end of the spindle 15 extends through a hole 79 of circular cross-section formed in opposite sides of the reel 14. The portions of the spindle 15 that extend through the holes 79 in the reel 14 have cylindrical outer surfaces. A flange 81 on the spindle 15 engages an annular groove 83 in the reel 14 surrounding the hole or opening 79 to guide the rotation of the reel on the spindle. Thus, the reel 14 is rotatably mounted on the spindle 15 for bidirectional rotational movement of the reel 14. As shown in Figures 2 and 4, the spindle 15 is internally slotted to receive the one longitudinal end 37 of the spring 32 to thereby secure the one end 37 of the spring 32 to the spindle 15.

The return spring 32 is constructed and arranged between the housing 12 and the reel 14 to rotate the reel 14 with respect to the housing 12 in a direction to wind the elongated blade 16 about the reel 14 into the housing 12. The return spring 32 is generally enclosed within the central wall portion 28 of the reel 14. The first longitudinal end 35 of the retraction spring 32 extends through the opening 26 and engages the first longitudinal end 18 of the blade 16, and the second longitudinal end 37 of the retraction spring 32 hookingly engages within a slot 39 formed in the spindle 15 to fix the end 37 of the spring 32. In one embodiment, the spring 32 is a thin, flat ribbon of metal (e.g., the metal being steel).

In one embodiment, the blade 16 is formed of a ribbon of metal (e.g., the metal being steel), and the top concave surface of the blade is printed with measuring lines and digits (not shown) for measuring lengths and distances. The blade 16 is wound on the reel 14 and the distal end of the blade 16 is arranged to extend outwardly through the opening 22 provided in the housing 12 as shown, for example, in Figure 1.

The blade or measuring tape 16 is generally movable between a fully retracted position and a fully extended position. The fully retracted position of the blade 16 is shown in Figure 2 and the fully extended position of the blade is shown in Figure 3. It can be appreciated from a comparison of Figure 2 and Figure 3 that as the blade is unwound from the reel 14, the spring 32 is wound more tightly around the rigidly fixed axle or reel spindle 15. This winding of the spring around the spindle stores energy in the spring to provide spring powered rewinding of the blade 16 around the reel 14 when the extended blade is released.

The blade 16 is constructed of a ribbon of sheet metal that is shaped during the manufacturing to have a normal or memory configuration that has a generally arcuate or concavo-convex transverse cross-section. In one embodiment, the thickness of the elongated blade 16 may be within the range of 0.0045 to 0.0063 inches. The blade 16 also comprises a paint layer 17 provided on the metal base material.

The elongated blade 16 has the end hook member 34 on the free end 20 thereof. The elongated blade 16 is arranged to be wound on the reel 14 and to be extendable through the opening 22 in the housing 12.

Optionally a holding assembly 124 is constructed and arranged to be manually actuated to hold the blade or measuring tape 16 in any position of extension outwardly of the housing opening 22 and to release the blade 16 from any position in which it is held. The structure and operation of the holding assembly 124 is best appreciated from a comparison of Figures 2 and 3. The holding assembly 124 includes a holding member 126 mounted on the housing 12 for movement in opposite directions between a normally inoperative position Figure 2 and a holding position Figure 3.

The structure of the housing 12 will now be discussed in further detail with respect to Figures 1, 5 and 6. Figure 5 shows a side view of the tape measure assembly and Figure 6 shows a rear view of the same tape measure assembly.

As mentioned previously the housing 12 comprises a clip assembly 19 for securely attaching the tape measure 10 to another object for retaining the tape measure 10. The clip assembly 19 comprises a projecting fixed arm 21 and a moveable sprung arm 23. The fixed arm 21 and the sprung arm 23 are shown in Figures 1, 5 and 6 in a closed position. In the closed position the sprung arm 23 abuts against the distal end 25 of the fixed arm 21. The distal end 25 of the fixed arm 21 comprises a recess 38 (as shown in Figure 1) for receiving the sprung arm 23 when the sprung arm 23 abuts against the fixed arm 21. The recess prevents the sprung arm 23 moving rearwardly away from the peripheral wall 48, 50 of the housing 12.

The fixed arm 21 projects rearwardly and comprises a first portion 27 which projects rearwardly and a second portion 29 connected to the first portion which extends in a downwardly direction substantially perpendicular to the rearward direction. Figure 5 shows brackets depicting the length of the first portion 27 and the second portion 29 of the fixed arm. The fixed arm 21 provides a hook-like structure which is fixed with respect to the rest of the tape measure which means that objects can be easily threaded thereon. If the fixed arm was moveable, the objects such as belt loops could slip off before the clip assembly 19 as placed in the closed position. In other embodiments the fixed arm 21 can be any suitable shape in order to provide a hook-like structure.

The second portion 29 extends in an upright direction. This means that when the tape measure 10 is placed on a flat surface such as a table, the upright, flat surface of the second portion 29 can be abutted up against a vertical surface such as a wall. The fixed arm 21 is integral with the housing 12. In alternative embodiments the fixed arm 21 may be separate and securely fastened to the housing 12.

The first portion 27 and the second portion 29 form a dog leg arrangement for the fixed arm which defines a space 31 between the housing 12 and the inward face 33 of the second portion 29 facing the housing. The space 31 is enclosed when the sprung arm 23 abuts against the distal end 25 of the fixed arm 21. The sprung arm 23 is narrower in width than the fixed arm 21 and the recess 38 prevents the sprung arm 23 being dislodged from abutment with the fixed arm 21 due to a sideways force.

The distal end 25 of the fixed arm comprises an oblique face 47 inclined towards the space 31. The most rearward edge of the oblique face 47 is lower than the most forward edge of the oblique face 47. The oblique face 47 provides a slanted end to the distal end 25 and this means that objects are more easily threaded on the fixed arm 21 of the clip assembly 19 when the object is directed toward the clip assembly 19. The fixed arm 21 comprises a protruding lip 49 which protrudes rearwardly beyond the sprung arm 23 when the sprung arm 23 abuts against the fixed arm 21. The protruding lip 49 provides an exposed surface for catching objects and directing them into the space 31. The combination of the inclined surface 47 of the distal end 25 and the protruding lip 49 means that the clip assembly 19 is more easily attached to objects.

The sprung arm 23 is pivotally mounted on the housing 12 at pivot point 36. The sprung arm 23 is arranged to pivot about the pivot point 36 between the closed and open positions. The sprung arm 23 is arranged to move between a closed position when the sprung arm is in abutment with the distal end 25 of the fixed arm 21 and an open position when the sprung arm 23 is adjacent the peripheral wall 48, 50 of the housing 12. When the sprung arm 23 is in the open position, the space 31 is no longer enclosed and the objects can be inserted into the space 31 via open mouth 53 revealed by the sprung arm 23 moving out of the way. The sprung arm 23 is biased to the closed position. The sprung arm 23 is moved from the closed position to the open position by exerting a force on the outside of the sprung arm and pressing it towards the housing 12. In some alternative embodiments the sprung arm 23 can be slidably mounted on the housing 12. The slidably mounted sprung arm 23 retracts into a recess in the housing (not shown).

The pivot point 36 of the sprung arm 23 is positioned closer along a forward - rearward longitudinal axis B of the tape measure assembly 10 to the opening 22 than an inward face 33 of the second portion 29 facing the housing. This means that when the clip assembly 19 is in the open position, the mouth 53 of the clip assembly 19 is downwardly facing which means that the user can clip the tape measure 10 by simply using an action of bringing an object against the sprung arm 23. In the orientation shown in Figure 5, a downward action is required to attach the clip assembly 19 to an object.

The sprung arm 23 as shown in Figures 1, 5 and 6 is a flat, planar element. The sprung arm 23 comprises a dog leg structure, but the sprung arm 23 in other embodiments can be flat. The sprung arm 23 is typically constructed from a metal material so that the sprung arm 23 is more durable and less prone to wear. The sprung arm 23 is biased with a coil spring 41 as shown in Figure 6. In other embodiments the coil spring 23 can be replaced with any biasing means suitable for biasing the sprung arm 23 such as a leaf spring or a resilient rubber element.

Operation of the clip assembly 19 will now be described. In normal operation the clip assembly 19 is in the closed position with the sprung arm 23 biased to the fixed arm 21. When the user wishes to attach the tape measure 10 to another object such as a belt loop, the user presses the sprung arm 23 against the belt loop and the sprung arm moves towards the peripheral wall 48, 50 of the housing 12. The fixed arm 21 then passes around the object such that the object is positioned in the space 31. When the object moves towards the space 31 the sprung arm 23 will exert a force against the object. The user continues to push the object into the space 31 until the sprung arm 23 snaps shut into the closed position. In order to release the tape measure 10 from the object the user simply presses on the sprung arm 23 and removes the object.

This means that the clip assembly 19 will automatically close the sprung arm 23 around an object. This means fastening the tape measure 10 to an object can be completed with one hand in a single motion. The sprung arm 23 will snap shut with an audible click. This means that the user knows when the tape measure 10 has been attached to an object, say a belt loop, without even looking at the tape measure. The release mechanism of the clip assembly is simple and easily accessible and means the user can release the tape measure using gloved hands. In this way the user can retract the tape measure and attach the tape measure 10 to an object such as a belt loop all with one hand.

In another embodiment two or more embodiments are combined. Features of one embodiment can be combined with features of other embodiments.

Embodiments of the present invention have been discussed with particular reference to the examples illustrated. However it will be appreciated that variations and modifications may be made to the examples described within the scope of the invention.

## Claims

1. A tape measure assembly comprising:
a housing;
a reel rotatably mounted in the housing;
an elongated blade wound on the reel and extendable through an opening in the housing; and
a spring within the housing and configured to rotate the reel in the housing in a direction to wind the blade up;
wherein the housing comprises a clip assembly comprising
a fixed arm projecting from the housing and
a moveable sprung arm mounted on the housing, the sprung arm being biased towards a distal end of the fixed arm such that the clip assembly is in a closed position when the sprung arm abuts the fixed arm.

2. A tape measure assembly according to claim 1 wherein the moveable sprung arm is pivotally mounted on the housing.

3. A tape measure assembly according to claims 1 or 2 wherein the fixed arm protrudes from the housing and defines a space between the fixed arm and the housing.

4. A tape measure assembly according to claims 1 to 3 wherein the distal end of the fixed arm comprises a recess for receiving a portion of the sprung arm.

5. A tape measure assembly according to any of the preceding claims wherein the clip assembly projects rearwardly in a direction opposite to the opening in the housing.

6. A tape measure assembly according to any of the preceding claims wherein the fixed arm comprises a first portion projecting rearwardly from the housing in a direction opposite to the opening in the housing and a second portion connected to the first portion extending substantially perpendicularly to the first portion.

7. A tape measure assembly according to claim 6 wherein a pivot mounting of the sprung arm is closer along a longitudinal axis of the tape measure assembly to the opening than a face of the second portion facing the housing.

8. A tape measure assembly according to any of the preceding claims wherein the sprung arm is metal and the fixed arm is a plastic material.

9. A tape measure assembly according to any of the preceding claims wherein the sprung arm is moveable between the closed position in which the sprung arm abuts the distal end of the fixed arm and an open position in which the sprung arm is adjacent to the housing.

10. A tape measure assembly according to any of the preceding claims wherein the rearwardly most portion of the fixed arm comprises a flat, upright portion for abutting against walls.

11. A tape measure assembly according to any of the preceding claims wherein the end of the distal end of the fixed arm comprises an oblique face.

12. A tape measure assembly according to claim 11 wherein the fixed arm comprises a protruding lip which protrudes rearwardly beyond the sprung arm when the sprung arm abuts against the fixed arm.

13. A tape measure assembly according to any of the preceding claims wherein the sprung arm is biased with a force sufficient to generate an audible click when the sprung arm returns to abutment with the fixed arm.

14. A tape measure assembly according to any of the preceding claims wherein a height dimension of the housing tapers from the forward end comprising the opening to the rearward end comprising the clip assembly.
